# FASCICULE DE BREVET EUROPEEN

(11) **EP 1 685 020 B1**
(45) Date de publication et mention de la délivrance du brevet: **10.10.2007**
(21) Numéro de dépôt: 04805333.4
(22) Date de dépôt: 28.10.2004
(51) Int. Cl.: B63B 1/20, B63B 1/32

(54) **CARENE PLANANTE**
SCHWIMMENDER SCHIFFSRUMPF
FLOATING HULL

(30) Priorité: 30.10.2003 FR 0312762
(43) Date de publication de la demande: 02.08.2006
(73) Titulaire: CHANTIERS BENETEAU S.A., 85270 Saint Hilaire de Riez (FR)
(72) Inventeur: LAVAL-JEANTET, Rémi, F-95350 Saint Brice sous Foret (FR); TABLEAU, Patrick, F-85270 Saint Hilaire de Riez (FR); TRONQUEZ, Maud, F-85800 Saint Gilles Croix de Vie (FR)
(74) Mandataire: Lepelletier-Beaufond, François
(86) Numéro de dépôt international: PCT/FR2004/002778
(87) Numéro de publication internationale: WO 2005/042340

(56) Documents cités:
- FR-A- 2 806 696
- US-A- 3 547 064
- US-A- 5 402 743
- US-A- 5 452 676
- US-B1- 6 425 341

## Description

L'invention concerne d'une manière générale les carènes, notamment mais non exclusivement pour des embarcations maritimes.

Elle concerne plus particulièrement une carène de bateau dont les formes sont optimisées en vue d'améliorer le comportement et/ou la vitesse et/ou le rendement du bateau.

La forme d'une carène est en effet un élément essentiel déterminant une grande partie du comportement du bateau à l'arrêt et en marche. L'une des principales préoccupations de ce domaine technique, est de concevoir des carènes qui minimisent les forces de friction de l'eau sous la coque de manière à améliorer le rendement et/ou la vitesse d'un bateau.

On connaît déjà des carènes de bateau dont les éléments constitutifs ont été conçus pour réduire le phénomène de succion de l'eau sur la carène et pour réduire la surface mouillée, de manière à réduire les frottements et la traînée. Pour y parvenir, l'une des méthodes connues est de former sur la carène une ou plusieurs dénivellations appelées "redans" ("steps" en anglais).

Ainsi, Eugène P. Clement et Joseph G. Koelbel, Jr., dans un article intitulé "Effects of Step Design on the Performance of Planing Motorboats", 4th biennal power boat symposium, SE section SNAM de février 1991, ("effets des redans sur la performance des bateaux planants à moteur"), étudient la manière dont différents types de redans permettent la réduction de friction recherchée et permettent aux bateaux de "planer", c'est-à-dire de glisser à la surface de l'eau au lieu de la pénétrer. L'article de Messieurs Clement et Koelbel Jr. traite notamment d'un navire torpilleur anglais, le "thornycroft CMB", datant de 1915-1918.

Un autre article intitulé "Aerodynamic and hydrodynamic aspects of high-speed water surface craft" ("comportement aérodynamique et hydrodynamique d'engins flottants destinés aux grandes vitesses") signé Dr. R.K. Nangia est paru dans le "Aeronautical Journal" de juin/Juillet 1987. Cet article traite de différentes conceptions de carènes destinées à minimiser la surface mouillée pour atteindre de hautes vitesses.

Ces articles montrent que le principe d'une carène comportant un ou plusieurs dénivelés formés par des redans est connu de longue date. Ce principe n'a néanmoins été appliqué jusqu'à présent qu'à des navires dont le niveau de confort n'est pas un critère essentiel de leur conception, tels que les bateaux de course ou les navires militaires.

On trouve néanmoins dans le commerce des bateaux de plaisance à moteur dont la carène présente des redans. De même, ces bateaux sont en général conçus pour une utilisation sportive et non pour être confortables. En effet, ils sont connus pour « taper » sur l'eau, au passage des vagues et ils ont tendance à virer à plat, soumettant de ce fait les passagers aux effets néfastes de la force centrifuge.

On connaît également du document US 5 140 930 une carène de bateau comportant un évidement de forme rectangulaire sur sa partie arrière, cet évidement agissant à la manière d'un redan pour provoquer un décollement du fluide par rapport à la carène. Cet évidement est limité en largeur de manière que deux flotteurs longitudinaux puissent courir de l'avant à l'arrière de la carène, à la manière d'un catamaran.

On connaît de plus du document US 3 547 064 une carène de bateau comportant un redan en forme de V dont la pointe est orientée vers l'avant.

On connaît enfin du document US 6 216 622 une carène de bateau comportant également un redan en forme de V orienté vers l'avant et comportant de plus deux paires de flotteurs longitudinaux s'étendant entre le tableau arrière de la carène et le redan en V.

L'invention vise à améliorer ce type de carène en proposant une carène planante destinée à minimiser la friction de l'eau sous la coque grâce à un redan en forme de V dont la pointe est orientée vers l'avant, tout en procurant une conduite plus souple, plus confortable et plus sûre du bateau.

A cet effet et selon un aspect, l'invention vise une carène planante comportant un fond de coque et une muraille délimités par deux bouchains et présentant une partie avant et une partie arrière, la partie avant et la partie arrière étant décalées l'une par rapport à l'autre au niveau d'un redan en forme de V dont la pointe est orientée vers l'avant, cette carène présentant une ligne de quille et étant caractérisée en ce que le redan présente une envergure s'étendant transversalement entre les deux bouchains et en ce que sur la partie arrière sont agencés deux patins latéraux effilés, saillant chacun du fond de coque au voisinage d'un bouchain et dont l'axe longitudinal est sensiblement parallèle au bouchain correspondant.

Selon un autre aspect, l'invention vise une carène planante comportant un fond de coque et une muraille délimités par deux bouchains et présentant une partie avant et une partie arrière, la partie avant et la partie arrière étant décalées l'une par rapport à l'autre au niveau d'un redan en forme de V dont la pointe est orientée vers l'avant, cette carène présentant une ligne de quille et étant caractérisée en ce que le redan présente une envergure s'étendant transversalement entre les deux bouchains et les bouchains comportent chacun une entaille dans le prolongement du redan ; et en ce que sur la partie arrière sont agencés deux patins latéraux effilés, saillant chacun du fond de coque au voisinage d'un bouchain et dont l'axe longitudinal est sensiblement parallèle au bouchain correspondant, chaque patin s'étendant de l'extrémité arrière de la carène jusqu'au niveau desdites entailles.

Selon un autre aspect, l'invention vise une carène planante comportant un fond de coque et une muraille délimités par deux bouchains et présentant une partie avant et une partie arrière, la partie avant et la partie arrière étant décalées l'une par rapport à l'autre au niveau d'un redan en forme de V dont la pointe est orientée vers l'avant, cette carène présentant une ligne de quille et étant caractérisée en ce que le redan présente une envergure s'étendant transversalement entre les deux bouchains ; et en ce que sur la partie arrière sont agencés deux patins latéraux effilés, saillant chacun du fond de coque au voisinage d'un bouchain et dont l'axe longitudinal est sensiblement parallèle au bouchain correspondant, chaque patin présentant un dièdre négatif.

Un espace d'écoulement peut être ménagé entre le redan et chacun des patins. L'écoulement peut en outre déboucher, du côté de chacun des patins, sur une entaille pratiquée dans le bouchain correspondant.

Selon un autre aspect, l'invention vise une carène planante comportant un fond de coque et une muraille délimités par deux bouchains et présentant une partie avant et une partie arrière, la partie avant et la partie arrière étant décalées l'une par rapport à l'autre au niveau d'un redan en forme de V dont la pointe est orientée vers l'avant, cette carène présentant une ligne de quille et étant caractérisée en ce que le redan présente une envergure s'étendant transversalement entre les deux bouchains et les bouchains comportent chacun une entaille dans le prolongement du redan ; et en ce que sur la partie arrière sont agencés deux patins latéraux effilés, saillant chacun du fond de coque au voisinage d'un bouchain et dont l'axe longitudinal est sensiblement parallèle au bouchain correspondant, chaque patin présentant un dièdre négatif et s'étendant de l'extrémité arrière de la carène jusqu'au niveau desdites entailles.

Une telle carène bénéficie des avantages procurés par un redan en V, tels qu'exposés précédemment, tout en réduisant fortement les inconvénients ayant trait à ce même redan, c'est-à-dire l'instabilité, le manque de confort, voire même le faible niveau de sécurité. En outre, comme exposé infra, une telle carène possède un rendement élevé, c'est-à-dire que pour un cas de chargement identique, elle peut mettre en oeuvre une motorisation moins puissante que d'autres carènes de l'art antérieur, notamment celles commercialisées à la date de dépôt de la demande de brevet.

En effet, ce redan, qui présente une envergure s'étendant transversalement entre deux bouchains de la carène, présente l'avantage selon lequel la surface mouillée de la carène garde une forme en chevron quelle que soit la vitesse du bateau, cette forme en chevron gardant en outre une envergure importante, même si elle diminue légèrement avec la vitesse.

Il s'ensuit que l'allongement de la surface mouillée augmente, ce qui a pour effet de réduire la traînée en pression. D'autres avantages liés au redan seront exposés infra à l'appui des dessins.

En outre, les patins permettent de stabiliser le bateau en tangage, ainsi qu'il sera exposé infra.

Au même titre qu'un caisson apposé sur le fond de la carène, le patin forme une réserve de flottabilité qui favorise l'équilibre du bateau à l'arrêt et aux basses vitesses en tangage.

Enfin, lorsque, conformément à l'un des aspects de l'invention, les patins présentent un dièdre négatif, le comportement du bateau est stabilisé en roulis, un couple chavireur vers l'intérieur du virage étant créé, ce qui permet de créer une composante de force s'opposant à la force centrifuge que subissent les passagers. De ce fait, on évite les inconvénients d'une carène ne présentant qu'un simple redan, qui, comme rappelé supra, a tendance à virer à plat.

En effet, la surface portante du patin intérieur agit un peu comme une dérive, ce qui stabilise le bateau dans son virage.

Les effets du dièdre négatif seront explicités plus avant, dans la description qui va suivre à l'appui des dessins.

Selon une caractéristique préférée, la carène comporte un redan supplémentaire disposé sur la partie arrière du fond de coque. Ce redan supplémentaire peut avoir une forme de V dont la pointe est orientée vers l'avant et dont l'envergure s'étend entre les deux patins.

Ce redan supplémentaire poursuit l'action du redan principal en provoquant également un décollement du fluide de la carène. Dans le cas d'un bateau plus grand, plusieurs redans supplémentaires peuvent de plus être prévus.

Selon une autre caractéristique préférée, la partie arrière présente une forme, prise en coupe transversale, comportant une portion en V dont chaque branche est reliée au patin par une portion courbe de retour orientée vers le bas, cette forme étant appelée par commodité « aile de mouette », de manière à créer une surface dont la courbure rend plus difficile le recollement du fluide sur l'arrière de la carène, après le redan.

Par ailleurs, chacune des entailles pratiquées dans les bouchains peut est délimitée par une première surface transversale au bouchain respectif et par une deuxième surface courbe de raccordement à la portion du bouchain attenante à la partie arrière de la carène, la première surface étant disposée en vis-à-vis du décalage provoqué par le redan entre les parties avant et arrière de la carène. La fonction d'évacuation du fluide en surpression s'écoulant le long du redan est ainsi favorisée.

La hauteur du décalage provoqué par le redan peut être plus importante à proximité de la pointe du V qu'à proximité des bouchains, afin de rabattre davantage le fluide vers le bas, au niveau des bouchains.

Selon une caractéristique préférée, chacun des patins est situé à l'écart du bouchain le long duquel il est disposé, de sorte à former une surface transversale à la muraille de la carène entre le patin et la muraille. Ainsi, la face extérieure des patins n'est pas dans le prolongement de la muraille de la carène. Le plat du bouchain court dans cette zone, de façon à rabattre le fluide vers le bas, et empêcher la formation de gerbes d'eau qui viendraient mouiller la muraille. Il empêche ainsi le fluide de recoller le long de la muraille à hautes vitesses et diminue donc la traînée et les frottements. Les flancs de la muraille sont ainsi protégés.

Une caractéristique particulièrement avantageuse dans certains cas concerne le fond de coque qui peut être pourvu d'au moins un orifice d'induction d'air, pratiqué dans ce fond de coque, cet orifice étant relié à des conduites d'air. L'orifice d'induction d'air peut être disposé dans la partie arrière de la carène, au niveau de la pointe du V du redan. Les conduites d'air peuvent comporter de plus au moins une prise d'air disposée sur la muraille de la carène et relient la prise d'air à l'orifice d'induction d'air.

Il se crée ainsi un coussin d'air sur le fond de coque, qui vient accentuer le phénomène de ventilation déjà produit par le redan et qui empêche tout recollement du fluide.

Le redan peut également présenter un rayon au niveau de la pointe du V, de façon à piéger le tourbillon qui s'y forme. Avec un tel rayon, le tourbillon s'accélère, et entraîne une dépression qui s'accentue pour aspirer davantage et auto-alimenter le tourbillon, ce qui va accentuer le phénomène de ventilation recherché. Ce rayon de courbure peut avoir une valeur d'environ la moitié de la hauteur du redan.

Pour des raisons d'efficacité et de commodité de réalisation, les mesures suivantes peuvent être envisagées, indépendamment les unes des autres:
- l'angle formé par le V du redan est de l'ordre de 60 degrés à 120 degrés ;
- la ligne de quille comporte deux portions correspondant aux deux parties de la carène situées de part et d'autre du redan, ces deux portions de la ligne de quille formant entre elles un angle compris entre 0 et 3 degrés.
- la ligne de quille comporte également une portion située en arrière du redan supplémentaire, cette portion formant un angle compris entre 0 et 6 degrés avec la portion de la ligne de quille située en avant du redan ;
- la carène comporte en outre des virures longitudinales sur sa partie avant.

D'autres caractéristiques et avantages de l'invention apparaissent à la lumière de la description qui va suivre d'un mode de réalisation préféré donné à titre d'exemple non limitatif, description faite en référence aux dessins annexés dans lesquels:
- la figure 1 est une vue en perspective d'une carène selon l'invention, la carène étant à l'envers par rapport à son mode normal de fonctionnement, la partie visible est ici la partie de la carène destinée à entrer en contact avec l'eau;
- la figure 2 est une vue en perspective du dessous de la carène de la figure 1 dans une position normale d'utilisation;
- les figures 3 et 4 sont respectivement des vues de côté et des vues de dessous de la carène de la figure 1 ;
- la figure 5 est une vue de face de la carène de la figure 1 ;
- les figures 6, 7, 8 et 9 sont des vues du profil de la carène selon, respectivement, les coupes VI-VI, VII-VII, VIII-VIII, IX-IX de la figure 4 ;
- les figures 10 et 11 sont des vues similaires à celle de la figure 4, la surface mouillée étant ici représentée en hachures, respectivement à une vitesse de vingt-cinq noeuds et trente noeuds ;
- la figure 12 est une vue similaire à celle de la figure 5, la carène étant ici en virage, inclinée par rapport à l'horizontale ;
- la figure 13 est une vue similaire à celle des figures 10 et 11 représentant la surface mouillée lorsque la carène est en virage ;
- les figures 14 et 15 correspondent respectivement aux figures 1 et 5 et illustrent un autre mode préféré de réalisation de l'invention.

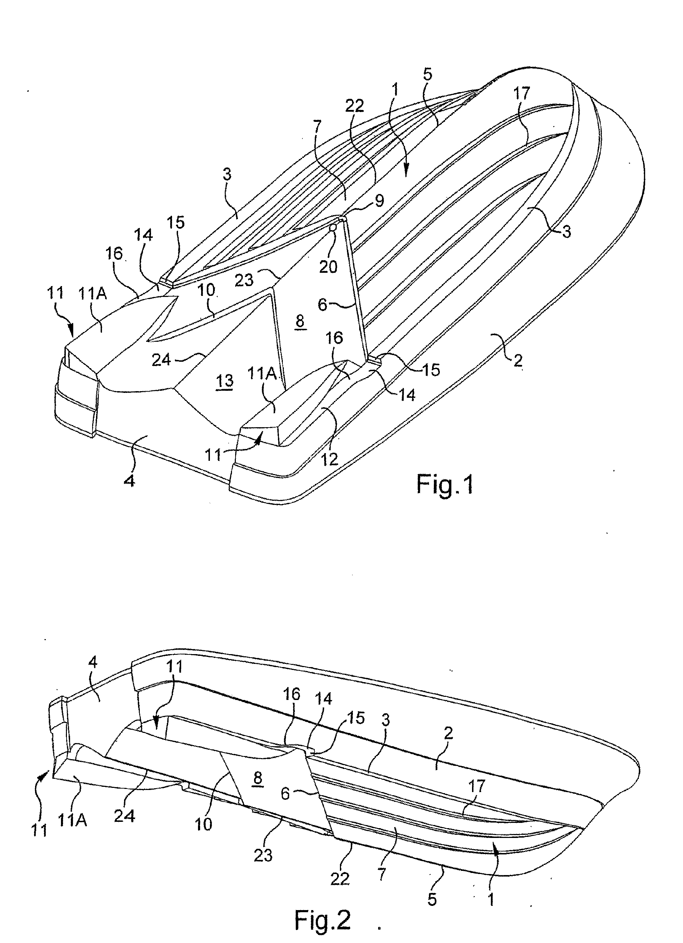

Les figures 1 à 13 ont trait à une carène de bateau seul. Cette carène est destinée à recevoir un pont ainsi que tous les aménagements classiques constitutifs d'un bateau.

Cette carène peut être réalisée en un quelconque matériau composite couramment employé dans ce domaine, ou tout autre type de construction appropriée.

Les opérations et moyens nécessaires à la construction du bateau étant connus de l'homme du métier, ils ne seront pas exposés plus en détail ici, seuls les éléments constituant la carène étant décrits ci-dessous.

Les figures 1 et 2 sont des vues générales, en perspective, de la carène selon l'invention. Plus précisément, la figure 1 représente la carène comme si elle était posée à l'envers sur un support, rendant visible la partie qui sera en contact avec l'eau lorsqu'un bateau équipé de cette carène sera en phase de navigation.

Cette carène comporte, de manière classique, un fond de coque 1 entouré par un flanc 2 couramment dénommé « muraille » en termes de métier. Ces deux éléments sont séparés par deux bouchains latéraux 3 permettant un changement d'inclinaison entre le fond de coque 1 et la muraille 2.

Les termes avant et arrière seront ici employés relativement au sens de marche du bateau. Ainsi, la partie arrière de la carène reçoit un tableau arrière 4 dans le prolongement de la muraille 2.

La carène présente de plus une ligne de quille 5 qui court de l'avant à l'arrière du fond de coque 1, divisant la carène en deux parties symétriques.

La ligne de quille ne comporte ici pas de quille saillante dans la mesure où la carène de cet exemple de réalisation est destinée à un bateau à propulsion mécanique qui ne nécessite pas de lest au niveau de la ligne de quille. La carène selon l'invention peut néanmoins être employée sur d'autres types de bateaux, par exemple des catamarans à voile ou à moteur.

Les éléments décrits précédemment sont également visibles sur la figure 2 qui représente une vue de dessous de la carène lorsque celle-ci est en position normale de fonctionnement.

Selon l'invention, la carène comporte de plus un redan 6 en forme de V créant ainsi une dénivellation qui sépare le fond de coque 1 en une partie avant 7 et une partie arrière 8.

Le redan 6 est conçu de telle sorte qu'il présente au niveau de la pointe du V, qui est tournée vers l'avant de la carène, un rayon formant une pointe 9 arrondie. Le dénivelé créé par le redan 6 est de plus variable, il est plus important à proximité de la pointe 9 du V qu'à proximité des bouchains 3.

Le redan 6 présente une envergure s'étendant sur toute la largeur du fond de coque 1 puisqu'il entre en contact avec chacun des bouchains 3 latéraux.

La carène comporte dans ce mode préféré de réalisation un deuxième redan 10, également en V avec la pointe disposée vers l'avant et située sur la partie arrière 8.

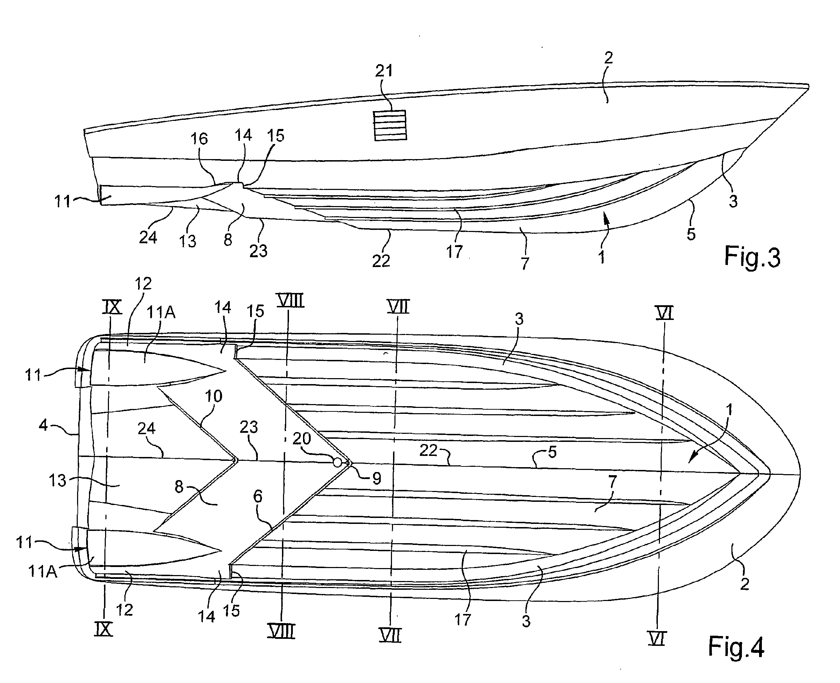

Selon l'invention, deux patins 11 latéraux sont disposés à l'arrière de la partie arrière 8. On observe ici qu'ils sont agencés de part et d'autre de la ligne de quille 5. Ces patins 11 ont une forme pointue tournée vers l'avant et comportent un axe longitudinal qui est sensiblement parallèle aux bouchains 3 (voir figure 4).

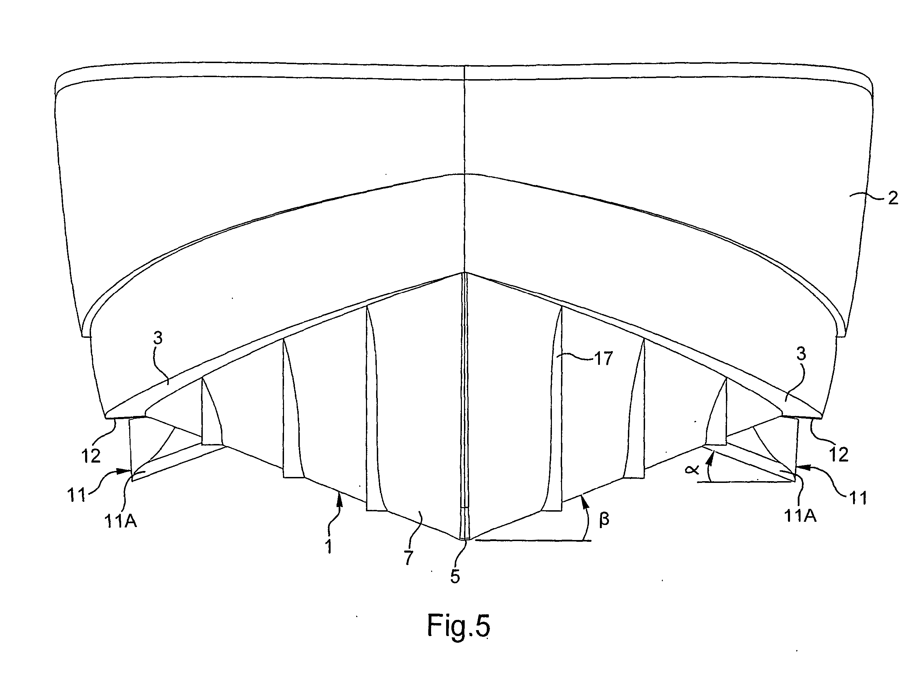

Les patins 11 sont orientés dans la direction de marche du bateau, la pointe tournée vers l'avant. Ces patins 11 sont formés d'une surface portante 11A qui, selon l'un des aspects de l'invention, présente un dièdre négatif, c'est-à-dire que chacun des patins 11 forme un angle avec l'horizontale, cet angle α étant ici sensiblement égal en valeur et opposé en signe à l'angle β formé par la partie avant du fond de coque, au niveau de la portion située en avant du redan dans la zone où cet angle est quasiment constant (voir figure 5).

L'expression "les patins présentent un dièdre négatif' désigne ici le fait que les surfaces 11A des patins 11 forment chacune un angle α avec l'horizontale (voir figure 5) de manière que les deux surfaces 11A forment entre elles un angle dont l'ouverture est orientée vers le bas.

Les patins 11 sont ici situés à l'écart des bouchains 3 de manière à ménager une surface transversale 12 entre chaque patin et le bouchain 3 correspondant. Le décalage entre les patins 11 et les bouchains 3, créant cette surface 12, est également bien visible à la figure 5. Cette disposition permet, comme on l'a vu supra, d'empêcher le fluide de recoller le long de la muraille à hautes vitesses et permet donc de diminuer la traînée.

Le redan supplémentaire 10 présente une envergure s'étendant entre les deux patins 11 délimitant ainsi une surface pseudo triangulaire 13, adjacente au tableau arrière 4. La partie arrière 8 et les redans 6, 10 sont agencés pour que la portion 23 de la ligne de quille 5 comprise entre le premier redan 6 et le deuxième redan 10 forme un angle avec la portion 22 de la ligne de quille 5 situé devant le redan 6, cet angle permettant à cette portion 23 de la partie arrière 8 d'être plus inclinée vers le haut lorsque la carène est en position normale d'utilisation.

Le deuxième redan 10 tend à empêcher que le fluide qui a été décollé par le premier redan 6 ne se recolle à la carène. De leurs côtés, les divers angles mis en oeuvre dans le présent mode de réalisation participent en l'améliorant à ce résultat.

De même, la portion 23 de la ligne de quille 5 comprise entre les deux redans 6, 10 et la portion 24 de la ligne de quille 5 de la surface pseudo triangulaire 13 forment également entre elles un angle, cet angle permettant à cette portion 24 d'être plus inclinée vers le haut lorsque la carène est en position normale d'utilisation.

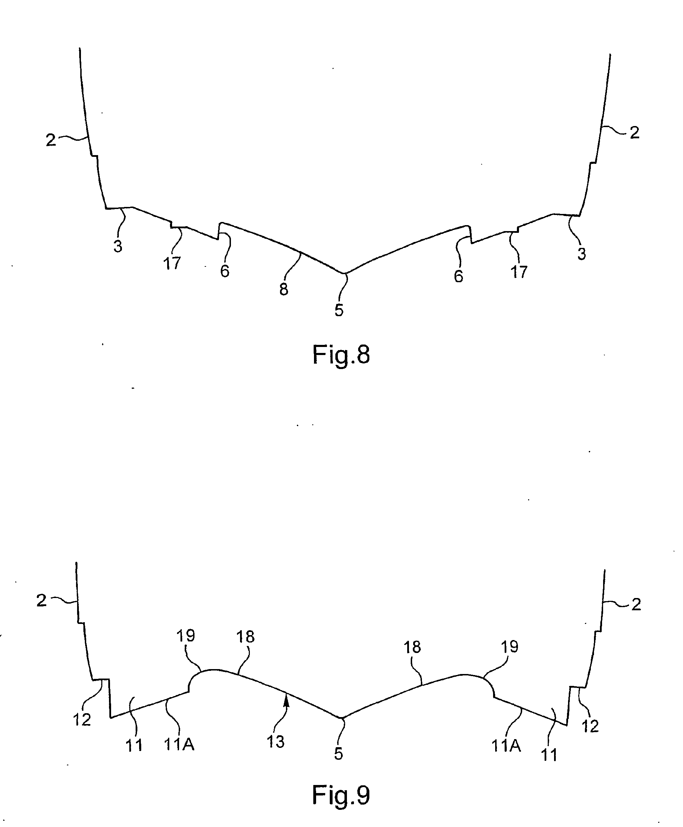

Selon l'invention, cette surface pseudo triangulaire 13 présente par ailleurs, en coupe transversale (voir la figure 9 qui est une coupe de la figure 4) une forme dite "en aile de mouette". Le profil présente en effet une portion en V dont chaque branche 18 est reliée au patin 11 correspondant par une portion courbe 19 de retour orientée vers le bas. Grâce à ce profil, il est ainsi formé au voisinage du tableau arrière deux couloirs à section courbe, répartis de part et d'autre de la ligne de quille 5 et adjacents aux patins 11. Ces couloirs ont pour effet d'empêcher en bonne partie le recollement du fluide dont le décollement est provoqué par les deux redans 6, 10 lorsque la carène navigue.

Selon un aspect de l'invention, les bouchains 3 comportent chacun une entaille 14 formée d'une surface transversale 15 à l'avant et d'une surface courbe de raccordement 16 à l'arrière. Cette entaille 14 est disposée en vis-à-vis du premier redan 6, la surface transversale 15 coïncidant avec le dénivelé du redan 6.

Le redan 6 et l'entaille 14 forment ainsi un espace d'écoulement ménagé entre le redan 6 et chacun des patins 11 pour laisser s'échapper le fluide et éviter tout engorgement dans une zone de surpression.

Selon une caractéristique avantageuse pouvant être mise en oeuvre dans certains cas, et utilisée dans le présent mode préféré de réalisation, le fond de coque est pourvu d'un orifice d'induction d'air 20, pratiqué ici dans ce fond de coque 1 au niveau de la ligne de quille 5 et agencé dans la partie arrière 8 de la carène, au niveau de la pointe du V du redan 6. En variante, plusieurs orifices peuvent être prévus, par exemple, tout le long du redan 6.

L'orifice 20 est relié à des conduites d'air. Dans ce mode de réalisation, ces conduites comportent deux prises d'air 21 disposées chacune sur chaque côté de la carène, et ménagées dans la muraille 2. Les prises d'air 21 sont ici reliées à l'orifice 20 par des conduites non représentées. Il peut être prévu dans certains cas une pompe d'injection d'air agencée dans le circuit reliant les prises d'air à/aux orifices(s) d'induction.

Les figures 1 à 3 montrent également des virures longitudinales 17 disposées sur la partie avant 7, sensiblement parallèlement à la ligne de quille 5.

La figure 4 montre la carène vue de dessus, lorsqu'elle est dans la position de la figure 1. Cette figure permet de voir le positionnement des différents éléments de la carène par rapport à l'axe longitudinal représenté ici par la ligne de quille 5.

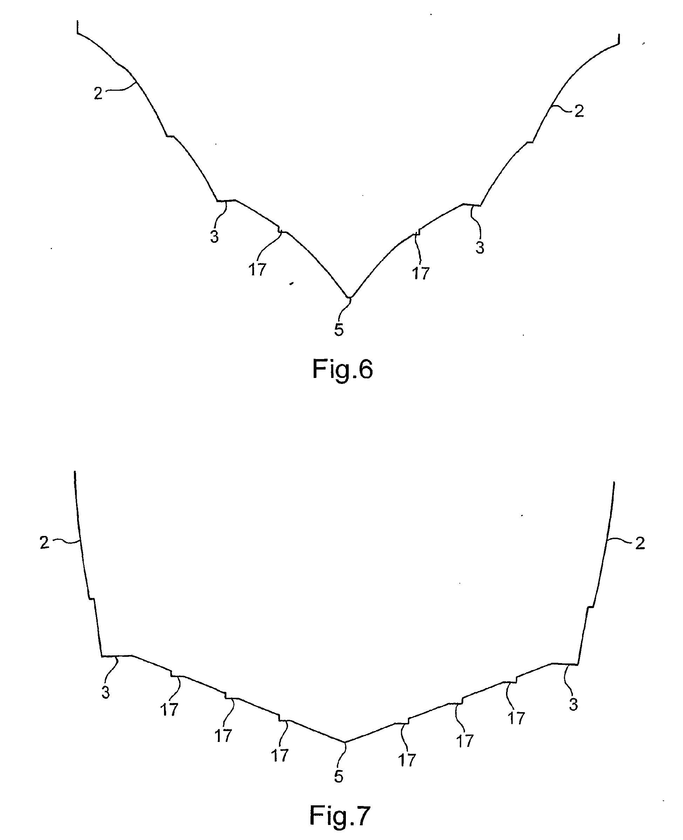

La coupe VI-VI de la figure 4 montre, à la figure 6, le profil de la carène à l'endroit de cette coupe : la partie avant 7 est similaire à une carène classique, grossièrement en forme de V et laissant apparaître la muraille 2, les bouchains 3 et les virures 17.

La coupe VII-VII de la figure 4, représentée à la figure 7, montre le profil de la partie avant 7 approximativement au milieu de la carène. Ce profil est également un profil classique de carène, plus élargi qu'à l'avant.

En ce qui concerne la coupe VIII-VIII, relative à la figure 8, celle-ci traverse le redan 6 et montre ainsi le dénivelé provoqué par le redan 6 au niveau de la coupe.

La carène qui vient d'être décrite procure un comportement en mer décrit ci-après.

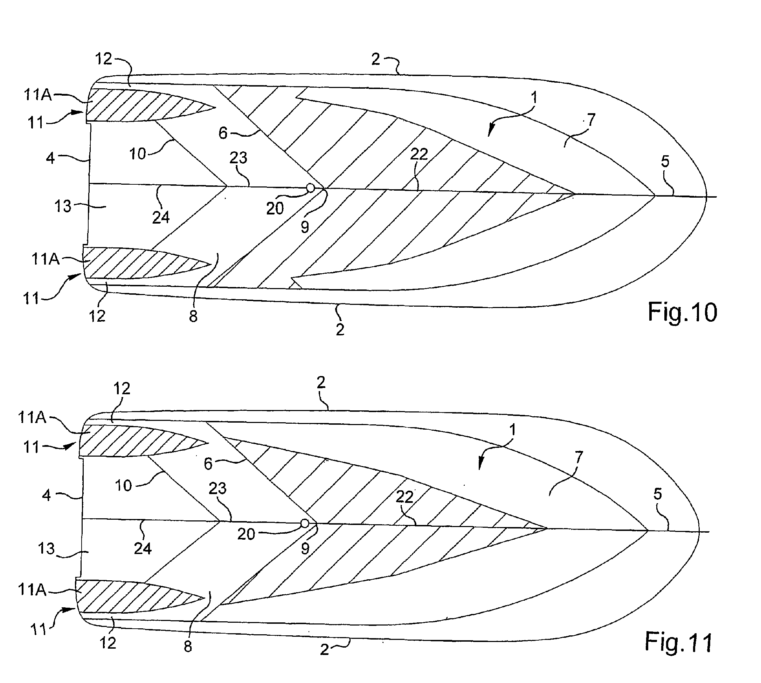

En référence aux figures 10 et 11, la carène est schématiquement représentée vue de dessous et en fonctionnement, les parties hachurées représentant les surfaces mouillées.

Les figures 10 et 11 illustrent ainsi la forme et l'étendue des surfaces mouillées respectivement pour une vitesse de 25 noeuds et de 30 noeuds. Il apparaît d'une part que les patins 11 restent mouillés, à l'inverse du reste de la partie arrière 8 et d'autre part que la surface mouillée relative à la partie avant 7 conserve sa forme de chevron. Ces deux caractéristiques induisent des avantages de stabilité en tangage.

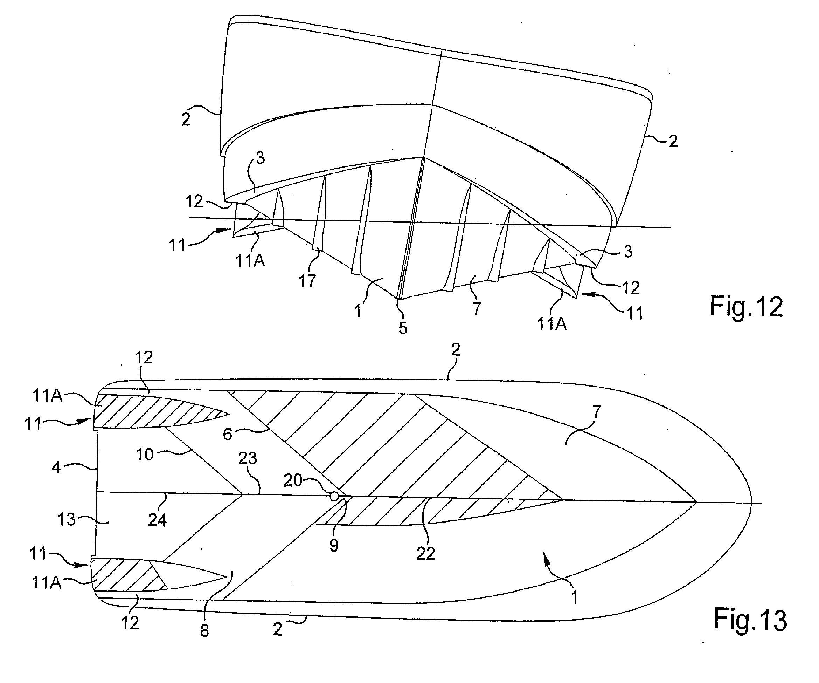

Par ailleurs, le comportement en virage de la carène est illustré par les figures 12 et 13.

La figure 12 montre les positions par rapport à la verticale que prennent les patins 11 lors d'un virage. L'intérêt du patin 11 extérieur au virage est ici visible, il tend à minimiser l'effet sous-vireur qui se crée lors du virage tandis que le patin 11 intérieur tend à rapprocher sa surface de la verticale pour que ce patin 11 intérieur se comporte comme une dérive.

La figure 13, quant à elle, est une vue similaire aux figures 10 et 11, la carène étant en virage serré. On observe la réduction de la surface mouillée d'une moitié du chevron, ainsi que du patin correspondant.

De même, ces illustrations sont relatives à des avantages de stabilité en roulis et en lacet.

Selon l'invention, le redan 6, qui présente une envergure s'étendant transversalement entre les deux bouchains 3 de la carène, présente l'avantage selon lequel la surface mouillée de la carène garde une forme en chevron quelle que soit la vitesse du bateau (voir figures 10 et 11). Au fur et à mesure de l'augmentation de vitesse, ce chevron va se raccourcir, c'est-à-dire que la pointe avant va reculer, ce qui va augmenter l'allongement de la surface mouillée ("allongement" est un terme technique désignant l'envergure de la surface mouillée élevée au carré et divisée par la surface projetée, "aspect ratio" en anglais). En effet, l'envergure reste à peu près constante tandis que la surface projetée diminue, lorsque la vitesse augmente. Un fort allongement réduit en effet la traînée de pression, ce qui permet une résistance à l'avancement moindre.

En outre, il existe un avantage lié à cette forte envergure conférée par la configuration du redan 6. L'envergure de cette surface portante permet d'obtenir un moment de rappel de la carène plus important : la réponse du bateau aux sollicitations extérieures en roulis est plus lente, c'est-à-dire que le bateau est plus stable de ce point vue, notamment avec des mers croisées.

L'entaille 14 qui est mise en oeuvre ici dans les bouchains 3, dans le prolongement du redan 6, permet de laisser s'échapper le fluide en surpression s'écoulant le long du redan 6. La surpression induite par la présence du redan 6 est ainsi limitée à une valeur acceptable.

Selon l'invention, les patins 11 ont pour avantage essentiel d'avoir une surface portante 11A qui est mouillée en fonctionnement, contrairement au reste de la surface ventilée située en arrière du premier redan 6.

La surface des patins 11 est avantageusement effilée dans le mode préféré de réalisation décrit ici. On rappelle à cet égard que l'effilement en hydrodynamique est le rapport entre la longueur et la largeur. Une surface effilée est une surface où le rapport de la largeur sur la longueur est faible. Le caractère allongé des patins 11 leur permet de garder comprimé le coussin d'air qui se forme depuis le redan 6.

Selon un des aspects de l'invention mis en oeuvre dans le mode de réalisation décrit ici, la surface 11A des patins 11 présente un dièdre négatif.

Les patins arrière 11 ont deux types de fonction en combinaison avec le redan 6.

Tout d'abord, une fonction de stabilisation hydrostatique (c'est-à-dire à l'arrêt ou en faible vitesse, non planante).

En effet, les patins 11 constituent un volume de flottabilité au même titre qu'un caisson qui serait apposé sur le fond de coque. Ils stabilisent alors la carène à l'arrêt et aux faibles vitesses non planantes. Plus précisément, les patins 11 permettent de garantir ainsi un angle raisonnable d'assiette de carène, c'est-à-dire peu élevé. On comprend à cet égard, que le caractère allongé de la portion mouillée en chevrons est par essence peu confortable à l'arrêt et aux faibles vitesses d'utilisation, car la carène est trop cabrée. Sans la présence des patins 11, la carène serait trop creusée sur l'arrière et n'aurait pas assez de volume immergé. La réserve de flottabilité constituée par les patins 11 permet de redresser cette carène, assurant ce de fait un meilleur confort d'utilisation (carène plus à l'horizontale).

Ensuite, les patins ont une fonction de stabilisation hydrodynamique selon les deux composantes suivantes:
- en tangage, le patin 11 agit comme un stabilisateur pour le bateau et pour le ramener à son assiette de fonctionnement stabilisée en cas de perturbation (telle que vagues). Quand le bateau prend de l'assiette positive, la surface portante avant diminue pour une portance du chevron avant quasiment constante. En revanche, l'assiette augmente aussi pour les patins, dont la surface portante augmente, ce qui entraîne une augmentation de la portance au niveau des patins 11 ; par conséquent, quand le bateau a tendance à se cabrer, les patins 11 ont tendance à y opposer un moment piqueur. On parle de stabilité en tangage ("static pitch stability" en anglais).
   Cet effet est d'ailleurs remarquable aussi bien en ligne droite qu'en virage. Avantageusement, on peut conférer aux patins 11 un angle d'incidence positif par rapport à la ligne de quille de la carène, ce qui a pour effet de provoquer encore plus tôt le déjaugeage ;
- en roulis et en lacet, les patins 11 permettent de lutter contre les effets de la force centrifuge (voir figures 12 et 13).

Une carène classique va en effet s'incliner à un angle tel qu'une projection de la résultante hydrodynamique sur le plan horizontal est égale à la réaction centrifuge. Ce qui évite aux passagers d'un tel bateau d'avoir le sentiment d'être projetés vers l'extérieur : l'inclinaison du bateau vers l'intérieur du virage leur fourni un appui qui leur permet de lutter contre cet effet de projection.

Avec la carène à redan 6 avec pointe vers l'avant et dans le cas où il n'y aurait pas de patins, en cas de virage, la surface projetée va diminuer beaucoup plus vite que dans le cas d'une carène sans redan. Dans ces conditions, il y aurait moins de soutien à l'extérieur du virage, c'est-à-dire un couple chavireur (vers l'intérieur du virage) bien inférieur. Dans une telle hypothèse, le redan provoque une surface mouillée en forme de chevron, mais la coque ne s'incline pas suffisamment vers l'intérieur du virage, voire même reste à plat, ce qui soumet les passagers à la force centrifuge, ceux-ci ayant moins d'appuis et ayant de ce fait la sensation d'être projetés vers l'extérieur.

Les patins 11 permettent d'éviter cet inconvénient propre aux redans et qui a fait que cette configuration a rarement été choisie pour des bateaux de navigation de plaisance dite "tranquille".

Le dièdre négatif que les patins présentent ici avantageusement selon un des aspects de l'invention, a ici un rôle : au fur et à mesure de l'inclinaison du bateau vers l'intérieur du virage, la surface projetée du patin situé à l'extérieur du virage par rapport à l'horizontale augmente et par conséquent sa surface de portance aussi, alors que la surface de portance du patin intérieur diminue, ce qui engendre un couple chavireur vers l'intérieur favorable (voir figure 12). Ainsi, quand le bateau vire, la pression s'effondre d'un côté et augmente de l'autre. De ce fait, les patins 11 minimisent l'effet sous-vireur qui se crée. Ils augmentent la stabilité latérale, en constituant deux appuis espacés latéralement, qui vont accroître la stabilité en roulis et en virage, offrant ainsi un pilotage plus sûr et plus confortable.

On notera par ailleurs que lors d'un virage, le patin intérieur s'approche plus de la verticale et prend une fonction de dérive, afin de maintenir une trajectoire, en prévenant ce qu l'on appellera une "chasse" arrière, c'est-à-dire un dérapage de la carène vers l'extérieur. Ainsi, un dièdre négatif au niveau des patins a pour avantage important de permettre un virage stabilisé en lacet ("yaw static stability" en anglais).

Bien entendu, des variantes de réalisation de la carène peuvent être envisagées sans pour autant sortir du cadre de l'invention.

On notera en particulier que la carène décrite supra à l'appui des dessins est destinée à être motorisée par un ou deux moteurs hors-bord ou embarqué. On comprendra toutefois que l'invention peut être mise en oeuvre sur d'autres types de bateau, par exemple sur les coques d'un catamaran à propulsion mécanique ou vélique ou encore sur la coque d'un hydravion.

Par ailleurs, les caractéristiques techniques de l'invention ne sont pas limitées aux modes de réalisation décrits, par exemple les patins peuvent être plus effilés et le dièdre négatif peut être sensiblement moins marqué que sur la réalisation des figures 1 à 13.

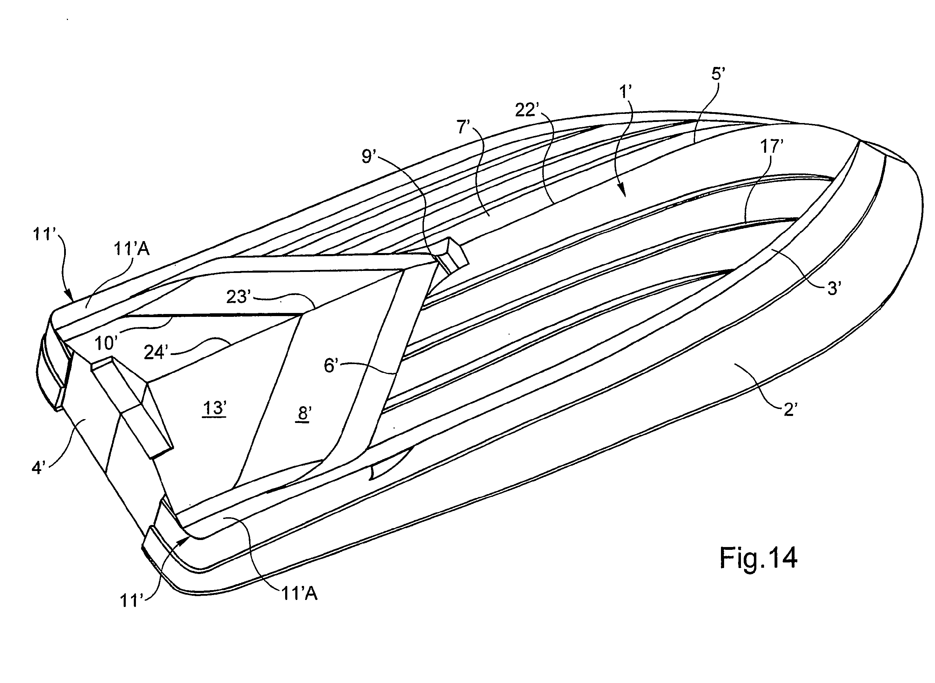

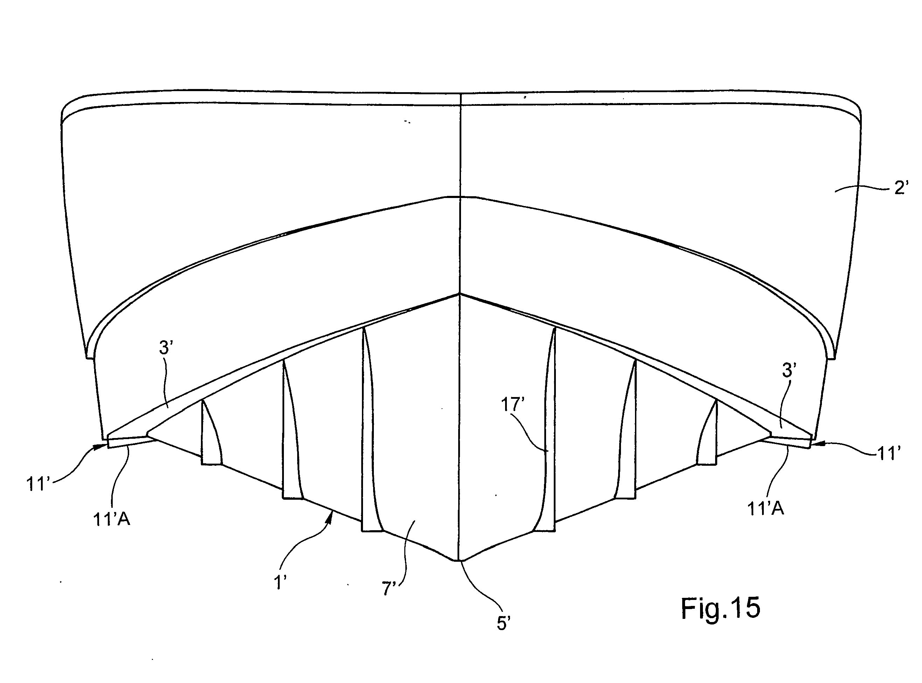

Les figures 14 et 15 illustrent à cet égard un autre mode préféré de réalisation de la carène selon l'invention. Sur ces figures, chaque élément correspondant à un élément des figures 1 à 13 est désigné par le même numéro de référence suivi d'un "prime" (').

## Revendications

1. Carène planante comportant un fond de coque (1) et une muraille (2) délimités par deux bouchains (3) et présentant une partie avant (7) et une partie arrière (8), la partie avant (7) et la partie arrière (8) étant décalées l'une par rapport à l'autre au niveau d'un redan (6) en forme de V dont la pointe (9) est orientée vers l'avant, cette carène présentant une ligne de quille (5) et étant **caractérisée en ce que** le redan (6) présente une envergure s'étendant transversalement entre les deux bouchains (3) et **en ce que** sur la partie arrière (8) sont agencés deux patins latéraux (11) effilés, saillant chacun du fond de coque (1) au voisinage d'un bouchain (3) et dont l'axe longitudinal est sensiblement parallèle au bouchain (3) correspondant.

2. Carène planante selon la revendication 1, **caractérisée en ce que** les bouchains (3) comportent chacun une entaille (14) dans le prolongement du redan (6); et en ce chaque patin (11) s'étend de l'extrémité arrière de la carène jusqu'au niveau desdites entailles (14).

3. Carène planante selon la revendication 1 ou la revendication 2, **caractérisée en ce que** chaque patin (11) présente un dièdre négatif.

4. Carène planante selon l'une des revendications 1 à 3, **caractérisée en ce qu'**un espace d'écoulement est ménagé entre le redan (6) et chacun des patins (11).

5. Carène planante selon la revendication 4, **caractérisée en ce que** l'espace d'écoulement débouche, du côté de chacun des patins (11), sur une entaille (14) pratiquée dans le bouchain (3) correspondant.

6. Carène planante selon l'une des revendications 1 à 5, **caractérisée en ce qu'**elle comporte un redan supplémentaire (10) disposé sur la partie arrière (8) du fond de coque (1).

7. Carène planante selon la revendication 6, **caractérisée en ce que** le redan supplémentaire (10) a une forme de V dont la pointe est orientée vers l'avant et dont l'envergure s'étend entre les deux patins (11).

8. Carène planante selon l'une des revendications 1 à 7, **caractérisée en ce que**, au voisinage de l'extrémité arrière de la carène, la partie arrière (8) présente une forme, prise en coupe transversale, comportant une portion en V dont chaque branche (18) est reliée au patin (11) correspondant par une portion courbe (19) de retour orientée vers le bas.

9. Carène planante selon l'une des revendications 1 à 8, **caractérisée en ce** chacune des entailles (14) pratiquées dans les bouchains (3) est délimitée par une première surface transversale (15) au bouchain (3) respectif et par une deuxième surface courbe (16) de raccordement à la portion du bouchain (3) attenante à la partie arrière (8) de la carène, la première surface (15) étant disposée en vis-à-vis du décalage provoqué par le redan (6) entre les parties avant (7) et arrière (8) de la carène.

10. Carène planante selon l'une des revendications 1 à 9, **caractérisée en ce que** la hauteur du décalage provoqué par le redan (6) est plus importante à proximité de la pointe (9) du V qu'à proximité des bouchains (3).

11. Carène planante selon l'une des revendications 1 à 10, **caractérisée en ce que** chacun des patins (11) est situé à l'écart du bouchain (3) le long duquel il est disposé, de sorte à former une surface transversale (12) à la muraille (2) de la carène entre le patin (11) et la muraille (2).

12. Carène planante selon l'une des revendications 1 à 11, **caractérisée en ce qu'**au moins un orifice d'induction d'air (20) est pratiqué dans le fond de coque (1), cet orifice (20) étant relié à des conduites d'air.

13. Carène planante selon la revendication 12, **caractérisée en ce que** l'orifice d'induction d'air (20) est disposé dans la partie arrière (8) de la carène, au niveau de la pointe du V du redan (6).

14. Carène planante selon l'une des revendications 12 et 13, **caractérisée en ce que** les conduites d'air comportent au moins une prise d'air (21) disposée sur la muraille (2) de la carène et ces conduites relient la prise d'air (21) à l'orifice d'induction d'air (20).

15. Carène planante selon l'une des revendications 1 à 14, **caractérisée en ce que** le redan (6) présente un rayon au niveau de la pointe (9) du V.

16. Carène planante selon la revendication 15, **caractérisée en ce que** ledit rayon de courbure a une valeur d'environ la moitié de la hauteur du redan (6).

17. Carène planante selon l'une des revendications 1 à 16, **caractérisée en ce que** les patins (11) présentent un angle d'incidence positif.

18. Carène planante selon l'une des revendications 1 à 17, **caractérisée en ce que** l'angle formé par le V du redan (6) est de l'ordre de 60 degrés à 120 degrés.

19. Carène planante selon l'une des revendications 1 à 18, **caractérisée en ce que** la ligne de quille (5) comporte deux portions (22, 23) correspondant aux deux parties de la carène situées de part et d'autre du redan (6), ces deux portions (22, 23) de la ligne de quille (5) formant entre elles un angle compris entre 0 et 3 degrés.

20. Carène planante selon l'une des revendications 6 et 7, **caractérisée en ce que** la ligne de quille (5) comporte également une portion (24) située en arrière du redan supplémentaire (10), cette portion (24) formant un angle compris entre 0 et 6 degrés avec la portion (22) de la ligne de quille (5) située en avant du redan (6).

21. Carène planante selon l'une des revendications 1 à 20, **caractérisée en ce qu'**elle comporte en outre des virures (17) longitudinales sur sa partie avant (7).

## Claims

1. Planing hull including a bottom (1) and a side (2) delimited by two chines (3) and having a forward portion (7) and an aft portion (8), the forward portion (7) and the aft portion (8) being offset relative to each other at a V-shaped step (6) the point (9) of which is oriented forwardly, this hull having a keel line (5) and being **characterised in that** the step (6) has a breadth extending transversely between the two chines (3) and **in that** on the aft portion (8) are arranged two tapered lateral skids (11), each projecting from the bottom (1) in the vicinity of a chine (3) and the longitudinal axis of which is substantially parallel to the corresponding chine (3).

2. Planing hull according to claim 1, **characterised in that** the chines (3) each include a notch (14) in alignment with the step (6) and **in that** each skid (11) extends from the aft end of the hull to said notches (14).

3. Planing hull according to claim 1 or claim 2, **characterised in that** each skid (11) has a negative dihedral.

4. Planing hull according to any one of claims 1 to 3, **characterised in that** a flow space is formed between the step (6) and each of the skids (11).

5. Planing hull according to claim 4, **characterised in that**, on the side of each of the skids (11), the flow space gives onto a notch (14) formed in the corresponding chine (3).

6. Planing hull according to any one of claims 1 to 5, **characterised in that** it includes a supplementary step (10) disposed on the aft portion (8) of the bottom (1).

7. Planing hull according to claim 6, **characterised in that** the supplementary step (10) is V-shaped with the point oriented forwardly and the breadth of which extends between the two skids (11).

8. Planing hull according to any one of Claims 1 to 7, **characterised in that**, in the vicinity of the aft end of the hull, the aft portion (8) has a shape, as seen in cross section, including a V-shaped portion each branch (18) of which is connected to the corresponding skid (11) by a downwardly-oriented curved return portion (19).

9. Planing hull according to any one of claims 1 to 8, **characterised in that** each of the notches (14) formed in the chines (3) is delimited by a first surface (15) transverse to the respective chine (3) and by a curved second surface (16) connecting the portion of the chine (3) adjoining the aft portion (8) of the hull, the first surface (15) being disposed facing the offset produced by the step (6) between the forward portion (7) and the aft portion (8) of the hull.

10. Planing hull according to any one of claims 1 to 9, **characterised in that** the height of the offset produced by the step (6) is greater in the vicinity of the point (9) of the V-shape than in the vicinity of the chines (3).

11. Planing hull according to any one of claims 1 to 10, **characterised in that** each of the skids (11) is situated away from the chine (3) along which it is disposed so as to form a surface (12) transverse to the side (2) of the hull between the skid (11) and the side (2).

12. Planing hull according to any one of claims 1 to 11, **characterised in that** at least one air intake orifice (20) is formed in the bottom (1), that orifice (20) being connected to air passages.

13. Planing hull according to claim 12,
**characterised in that** the air intake orifice (20) is disposed in the aft portion (8) of the hull in the region of the point of the V-shape of the step (6).

14. Planing hull according to either of claims 12 and 13, **characterised in that** the air passages include at least one air inlet (21) disposed on the side (2) of the hull and connect the air inlet (21) to the air intake orifice (20).

15. Planing hull according to any one of claims 1 to 14, **characterised in that** the step (6) has a radius of curvature in the vicinity of the point (9) of the V-shape.

16. Planing hull according to claim 15,
**characterised in that** said radius of curvature has a value approximately half the height of the step (6).

17. Planing hull according to any one of claims 1 to 16, **characterised in that** the skids (11) have a positive angle of incidence.

18. Planing hull according to any one of claims 1 to 17, **characterised in that** the angle formed by the V-shape of the step (6) is of the order of 60° to 120°.

19. Planing hull according to any one of claims 1 to 18, **characterised in that** the keel line (5) includes two portions (22, 23) corresponding to the two portions of the hull situated on either side of the step (6), these two portions (22, 23) of the keel line (5) forming an angle between them between 0 and 3°.

20. Planing hull according to either of claims 6 and 7, **characterised in that** the keel line (5) also includes a portion (24) situated aft of the supplementary step (10), this portion (24) forming an angle between 0 and 6° with the portion (22) of the keel line (5) situated forward of the step (6).

21. Planing hull according to any one of claims 1 to 20, **characterised in that** it further includes longitudinal strakes (17) on its forward portion (7).

## Patentansprüche

1. Schwimmender Schiffsrumpf mit einem Boden (1) und einer Seitenwand (2) begrenzt durch zwei Kimmen (3) und bestehend aus einem vorderen (7) und einem hinteren Teil (8). Der vordere Teil (7) und der hintere Teil (8) sind auf Höhe einer V-förmigen Abstufung (6), deren Spitze (9) nach vorne zeigt, gegenüber einander versetzt. Dieser Schiffsrumpf verfügt über eine Kiellinie (5) und zeichnet sich **dadurch** aus, dass die Abstufung (6) sich quer zwischen den beiden Kimmen (3) erstreckt und dass auf dem hinteren Teil (8) zwei seitliche, spitz zulaufende Gleitkufen (11) angebracht sind, die jeweils aus dem Schiffsboden (1) neben einer Kimme (3) hervortreten und deren Längsachse eindeutig parallel zur entsprechenden Kimme (3) verläuft.

2. Schwimmender Schiffsrumpf gemäß des Anspruchs 1, der sich **dadurch** auszeichnet, dass die Kimmen (3) jeweils über eine Einkerbung (14) in der Verlängerung der Abstufung (6) verfügen und dass jede der Gleitkufen (11) sich vom hinteren Ende des Rumpfes bis auf Höhe der genannten Einkerbungen (14) erstreckt.

3. Schwimmender Schiffsrumpf gemäß des Anspruchs 1 oder des Anspruchs 2, der sich **dadurch** auszeichnet, dass jede der Gleitkufen (11) über eine negative V-Stellung verfügt.

4. Schwimmender Schiffsrumpf gemäß einem der Ansprüche 1 bis 3, der sich **dadurch** auszeichnet, dass zwischen der Abstufung (6) und einer jeder der Gleitkufen (11) eine Ablauffläche vorgesehen ist.

5. Schwimmender Schiffsrumpf gemäß des Anspruchs 4, der sich **dadurch** auszeichnet, dass die Ablauffläche auf der Seite einer jeder der Gleitkufen (11) in eine Einkerbung (14) mündet, die in der entsprechenden Kimme (3) ausgebildet ist.

6. Schwimmender Schiffsrumpf gemäß einem der Ansprüche 1 bis 5, der sich **dadurch** auszeichnet, dass er über eine zusätzliche Abstufung (10) verfügt, die sich im hinteren Teil (8) des Schiffsbodens (1) befindet.

7. Schwimmender Schiffsrumpf gemäß des Anspruchs 6, der sich **dadurch** auszeichnet, dass die zusätzliche Abstufung (10) über eine V-Form verfügt, deren Spitze nach vorne gerichtet ist und die sich zwischen den beiden Gleitkufen (11) erstreckt.

8. Schwimmender Schiffsrumpf gemäß einem der Ansprüche 1 bis 7, der sich **dadurch** auszeichnet, dass der hintere Teil in der Nähe des hinteren Endes des Rumpfes im Querschnitt gesehen einen V-förmigen Teil enthält, von dem jeder Schenkel (18) über einen kurvenförmigen Teil (19), der nach hinten unten verläuft, mit der entsprechenden Gleitkufe (11) verbunden ist.

9. Schwimmender Schiffsrumpf gemäß einem der Ansprüche 1 bis 8, der sich **dadurch** auszeichnet, dass jede der Einkerbungen (14) in den Kimmen (3) durch eine erste Querfläche (15) auf der jeweiligen Kimme (3) und durch eine zweite gebogene Verbindungsfläche (16) in demjenigen Teil der Kimme (3), der an den hinteren Teil (8) des Rumpfs anschließt, begrenzt wird, wobei die erste Fläche (15) gegenüber der Höhendifferenz liegt, die durch die Abstufung (6) zwischen dem vorderen Teil (7) und dem hinteren Teil (8) des Schiffsrumpfes entsteht.

10. Schwimmender Schiffsrumpf gemäß einem der Ansprüche 1 bis 9, der sich **dadurch** auszeichnet, dass die Höhendifferenz, die durch die Abstufung (6) entsteht, in der Nähe der Spitze (9) des V größer ist als in der Nähe der Kimmen (3).

11. Schwimmender Schiffsrumpf gemäß einem der Ansprüche 1 bis 10, der sich **dadurch** auszeichnet, dass jede der Gleitkufen (11) fern von der Kimme (3) liegt, entlang derer sie angebracht ist, sodass eine Querfläche (12) zur Seitenwand (2) des Schiffsrumpfes zwischen der Gleitkufe (11) und der Seitenwand (2) gebildet wird.

12. Schwimmender Schiffsrumpf gemäß einem der Ansprüche 1 bis 11, der sich **dadurch** auszeichnet, dass mindestens ein Luftzufuhrloch (20), das mit Luftleitungen verbunden ist, am Boden des Rumpfes (1) angebracht wird.

13. Schwimmender Schiffsrumpf gemäß des Anspruchs 12, der sich **dadurch** auszeichnet, dass das Luftzufuhrloch (20) im hinteren Teil (8) des Schiffsrumpfes auf Höhe der Spitze des V der Abstufung (6) angebracht ist.

14. Schwimmender Schiffsrumpf gemäß einem der Ansprüche 1 bis 13, der sich **dadurch** auszeichnet, dass die Luftleitungen über mindestens einen Luftanschluss (21) verfügen, der an der Seitenwand (2) des Rumpfes angebracht ist, und dass diese Leitungen den Luftanschluss (21) mit dem Luftzufuhrloch (20) verbinden.

15. Schwimmender Schiffsrumpf gemäß einem der Ansprüche 1 bis 14, der sich **dadurch** auszeichnet, dass die Abstufung (6) auf Höhe der Spitze des V (9) einen Radius aufweist.

16. Schwimmender Schiffsrumpf gemäß des Anspruchs 15, der sich **dadurch** auszeichnet, dass der genannte Kurvenradius einen Wert hat, der ungefähr der Hälfe der Höhe der Abstufung entspricht.

17. Schwimmender Schiffsrumpf gemäß einem der Ansprüche 1 bis 16, der sich **dadurch** auszeichnet, dass die Gleitkufen (11) einen positiven Anströmwinkel aufweisen.

18. Schwimmender Schiffsrumpf gemäß einem der Ansprüche 1 bis 17, der sich **dadurch** auszeichnet, dass der Winkel, der vom V der Abstufung (6) gebildet wird, zwischen 60 und 120 Grad liegt.

19. Schwimmender Schiffsrumpf gemäß einem der Ansprüche 1 bis 18, der sich **dadurch** auszeichnet, dass die Kiellinie (5) zwei Teile umfasst (22, 23), die den beiden Teilen des Schiffsrumpfes entsprechen, die zu beiden Seiten der Abstufung (6) liegen, wobei diese beiden Teile (22, 23) der Kiellinie (5) untereinander einen Winkel zwischen 0 und 3 Grad bilden.

20. Schwimmender Schiffsrumpf gemäß einem der Ansprüche 6 und 7, der sich **dadurch** auszeichnet, dass die Kiellinie (5) ebenfalls einen Teil (24) enthält, der im hinteren Teil der zusätzlichen Abstufung (10) liegt, wobei dieser Teil (24) mit dem Teil (22) der Kiellinie (5), der vor der Abstufung (6) liegt, einen Winkel zwischen 0 und 6 Grad bildet.

21. Schwimmender Schiffsrumpf gemäß einem der Ansprüche 1 bis 20, der sich **dadurch** auszeichnet, dass er außerdem längliche Plattengänge (17) an seinem vorderen Teil enthält.
